Europäisches Patentamt

European Patent Office

Office européen des brevets

(19)

(11) **EP 0 941 269 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(51) Int Cl.[7]: **C08G 65/20**, C08G 65/10, B01J 23/24

(21) Anmeldenummer: **97951227.4**

(22) Anmeldetag: **18.11.1997**

(86) Internationale Anmeldenummer:
**PCT/EP97/06426**

(87) Internationale Veröffentlichungsnummer:
**WO 98/024829 (11.06.1998 Gazette 1998/23)**

(54) **VERBESSERTES VERFAHREN ZUR HERSTELLUNG VON POLYTETRAHYDROFURAN**

IMPROVED PROCESS FOR PREPARING POLYTETRAHYDROFURAN

PROCEDE AMELIORE DE PRODUCTION DE POLYTETRAHYDROFURANE

(84) Benannte Vertragsstaaten:
**BE DE ES FR GB IT NL**

(30) Priorität: **02.12.1996 DE 19649803**

(43) Veröffentlichungstag der Anmeldung:
**15.09.1999 Patentblatt 1999/37**

(73) Patentinhaber: **BASF AKTIENGESELLSCHAFT
67056 Ludwigshafen (DE)**

(72) Erfinder:
- **ELLER, Karsten
  D-67061 Ludwigshafen (DE)**
- **SIGWART, Christoph
  D-69198 Schriesheim (DE)**
- **BECKER, Rainer
  D-67098 Bad Dürkheim (DE)**
- **PLITZKO, Klaus-Dieter
  D-67117 Limburgerhof (DE)**
- **FISCHER, Rolf
  D-69121 Heidelberg (DE)**
- **STEIN, Frank
  D-67098 Bad Dürkheim (DE)**
- **MÜLLER, Ulrich
  D-67434 Neustadt (DE)**
- **HESSE, Michael
  D-67549 Worms (DE)**

(56) Entgegenhaltungen:
WO-A-96/09335          DE-A- 4 433 606
DE-A- 19 507 399       US-A- 5 344 964
US-A- 5 463 020

- **PATENT ABSTRACTS OF JAPAN vol. 095, no. 011, 26.Dezember 1995 & JP 07 228684 A (MITSUBISHI CHEM CORP), 29.August 1995,**

**Beschreibung**

Die vorliegende Erfindung betrifft ein verbessertes Verfahren zur Herstellung von Polytetrahydrofuran, Tetrahydrofuran-copolymeren, Diestern oder Monoestern dieser Polymere durch die Polymerisation von Tetrahydrofuran in Gegenwart mindestens eines Telogens und/oder Comonomers an einem heterogenen Trägerkatalysator, der auf einem oxidischen Trägermaterial als Aktivmasse eine katalytisch aktive Menge mindestens einer sauerstoffhaltigen Molybdän- und/oder Wolframverbindung enthält und der nach Aufbringung der Vorläuferverbindungen der Aktivmasse auf den Trägermaterial-Vorläufer bei Temperaturen von 500 °C bis 1000 °C kalziniert worden ist.

Polytetrahydrofuran ("PTHF"), auch Polyoxybutylenglykol genannt, ist in der Kunststoff- und Kunstfaserindustrie ein vielseitiges Zwischenprodukt und dient unter anderem zur Herstellung von Polyurethan-, Polyester- und Polyamid-Elastomeren. Daneben ist es wie auch manche seiner Derivate in vielen Anwendungsfällen ein wertvoller Hilfsstoff, so zum Beispiel als Dispergiermittel oder etwa beim Entfärben ("Deinken") von Altpapier.

PTHF wird technisch vorteilhafterweise hergestellt durch Polymerisation von Tetrahydrofuran an geeigneten Katalysatoren in Gegenwart von Reagentien, deren Zugabe die Steuerung der Kettenlänge der Polymerketten und so die Einstellung des mittleren Molekulargewichts auf den gewünschten Wert ermöglicht (Kettenabbruchreagentien oder "Telogene"). Die Steuerung erfolgt dabei durch Wahl von Art und Menge des Telogens. Durch Wahl geeigneter Telogene können zusätzlich funktionelle Gruppen an ein Ende oder beide Enden der Polymerkette eingeführt werden. So können zum Beispiel durch Verwendung von Carbonsäuren oder Carbonsäureanhydriden als Telogene die Mono- oder Diester des PTHFs hergestellt werden. Andere Telogene wirken nicht nur als Kettenabbruchreagentien, sondern werden auch in die wachsende Polymerisatkette des PTHFs eingebaut, haben also nicht nur die Funktion eines Telogens, sondern auch die eines Comonomers und können daher mit gleicher Berechtigung als Telogen oder als Comonomer bezeichnet werden. Beispiele für solche Comonomere sind Telogene mit zwei Hydroxigruppen wie die Dialkohole. Beispiele für solche Dialkohole sind Ethylenglykol. Propylenglykol, Butylenglykol, 1,4-Butandiol, 2-Butin-1,4-diol, 1,6-Hexandiol oder niedermolekulares PTHF. Die Verwendung solcher Comonomere führt zur Herstellung von Tetrahydrofuran-Copolymeren. Auf diese Weise kann das PTHF auch chemisch modifiziert werden. Ein Beispiel dafür ist die Verwendung des Telogens 2-Butin-1,4-diol, dessen Zugabe zum Vorhandensein eines Anteils an $C\equiv C$-Dreifachbindungen in den Polymerketten des PTHFs führt. Derartig modifiziertes PTHF kann durch die Reaktivität dieser Dreifachbindungen an diesen Stellen chemisch weiter veredelt werden, zum Beispiel durch Hydrierung der Dreifach- zu Doppelbindungen, durch anschließende Anpolymerisation anderer Monomere ("Propfen") zur Einstellung der Eigenschaften des Polymers, Vernetzung zur Bildung von Polymeren mit vergleichsweise starrer Struktur, oder andere gängige Maßnahmen der Polymerchemie. Die komplette Hydrierung der vorhandenen Dreifachbindungen ist ebenfalls möglich und führt im allgemeinen zu PTHF mit einer besonders niedrigen Farbzahl.

DE-A 44 33 606 beschreibt ein Verfahren zur Herstellung von PTHF, PTHF-Diestern von $C_2$- bis $C_{20}$-Monocarbonsäuren oder PTHF-Monoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, PTHF eines Molekulargewichts von 200 bis 700 Dalton, einer $C_1$- bis $C_{10}$-Monocarbonsäure oder eines Carbonsäureanhydrids aus $C_2$- bis $C_{20}$-Monocarbonsäuren oder Gemischen dieser Telogene, wobei der Katalysator ein Trägerkatalysator ist, der eine katalytisch aktive Menge einer sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500 °C bis 1000 °C kalziniert worden ist.

WO 96/09335 lehrt ein Verfahren zur Herstellung von PTHF oder PTHF-Monoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, PTHF eines Molekulargewichts von 200 bis 700 Dalton, einer $C_1$- bis $C_{10}$-Monocarbonsäure oder Gemischen dieser Telogene, wobei der Katalysator ein Trägerkatalysator ist, der eine katalytisch aktive Menge einer sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500 °C bis 1000 °C kalziniert worden ist.

Die ältere deutsche Patentanmeldung DE-A 19641481.4 vom 09.10.1996 lehrt ein Verfahren zur Herstellung von Polytetrahydrofuran, Copolymeren aus Tetrahydrofuran und 2-Butin-1,4-diol, Diestern dieser Polymere mit $C_2$- bis $C_{20}$-Monocarbonsäuren oder Monoestern dieser Polymere mit $C_1$- bis $C_{10}$-Monocarbonsäuren durch die Polymerisation von Tetrahydrofuran in Gegenwart eines der Telogene Wasser, 1,4-Butandiol, 2-Butin-1,4-diol, Polytetrahydrofuran eines Molekulargewichts von 200 bis 700 Dalton, einer $C_1$ bis $C_{10}$-Monocarbonsäure oder eines Carbonsäureanhydrids aus $C_2$ bis $C_{20}$-Monocarbonsäuren oder Gemischen dieser Telogene an einem heterogenen Trägerkatalysator, der eine katalytisch aktive Menge einer sauerstoffhaltigen Molybdän- und/oder Wolframverbindung auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500 °C bis 1000 °C kalziniert worden ist und der vor seinem Einsatz als Polymerisationskatalysator durch Behandlung mit einem Reduktionsmittel aktiviert wurde.

Da die Wirtschaftlichkeit eines heterogen-katalysierten PTHF-Verfahrens entscheidend von der Produktivität des Katalysators abhängt, lag der vorliegenden Erfindung die Aufgabe zugrunde, die Katalysatoraktivität der bekannten Katalysatoren bei der THF-Polymerisation zu steigern, um höhere Polymer-Ausbeuten und/oder Raum-Zeit-Ausbeuten zu erreichen.

Dementsprechend wurde ein Verfahren zur Herstellung von Polytetrahydrofuran, Tetrahydrofuran-Copolymeren, Diestern oder Monoestern dieser Polymere durch die Polymerisation von Tetrahydrofuran in Gegenwart mindestens eines Telogens und/oder Comonomers an einem heterogenen Trägerkatalysator, der auf einem oxidischen Trägermaterial als Aktivmasse eine katalytisch aktive Menge mindestens einer sauerstoffhaltigen Molybdän- und/oder Wolframverbindung enthält und der nach Aufbringung der Vorläuferverbindungen der Aktivmasse auf den Trägermaterial-Vorläufer bei Temperaturen von 500 °C bis 1000 °C kalziniert worden ist, gefunden, das dadurch gekennzeichnet ist, daß man einen Katalysator verwendet, der einen Promotor enthält, welcher mindestens ein Element oder eine Verbindung eines Elements der 2., 3. einschließlich der Lanthaniden, 5., 6., 7., 8. oder 14. Gruppe des Periodensystems der Elemente umfaßt.

Als Polymerisationskatalysatoren werden im erfindungsgemäßen Verfahren Trägerkatalysatoren auf einem oxidischen Trägermaterial verwendet, die sauerstoffhaltige Molybdän- oder Wolframverbindungen oder Gemische solcher Verbindungen als katalytisch aktive Verbindungen ("Aktivmasse") und mindestens einen Promotor oder eine Verbindung eines Promotors aus der 2., 3. einschließlich der Lanthaniden, 5., 6., 7., 8., oder 14. Gruppe des Periodensystems der Elemente enthalten.

Als Trägermaterial sind im allgemeinen oxidische Träger, beispielsweise Zirkoniumdioxid, Titandioxid, Hafniumoxid, Yttriumoxid, Eisen(III)oxid, Aluminiumoxid, Zinn(IV)oxid, Siliciumdioxid, Zinkoxid oder Gemische dieser Oxide geeignet, bevorzugt wird jedoch die Verwendung von Zirkondioxid oder Titandioxid, wobei Titandioxid besonders bevorzugt wird.

Als Aktivmasse sind sauerstoffhaltige Molybdän- oder Wolframverbindungen oder Gemische solcher Verbindungen geeignet, wobei die Verwendung von sauerstoffhaltigen Wolframverbindungen oder von Gemischen sauerstoffhaltiger Wolframverbindungen mit sauerstoffhaltigen Molybdänverbindungen, bei denen der Anteil an Wolframverbindungen überwiegt, bevorzugt wird. Besonders bevorzugt wird die Verwendung von Katalysatoren, deren Aktivmasse, abgesehen von üblichen Verunreinigungen, praktisch nur aus sauerstoffhaltigen Wolframverbindungen besteht.

Die genaue chemische und physikalische Struktur der Aktivmasse ist unbekannt. Der Einfachheit halber wird der Gehalt des Katalysators an Aktivmasse auf die Trioxide des Wolframs oder Molybdäns bezogen.

Die Katalysatoren enthalten im allgemeinen 0,1 bis 50 Gew.-%, vorzugsweise 5 bis 40 Gew.-% und besonders bevorzugt 5 bis 25 Gew.-% der Aktivmasse, berechnet als $MoO_3$ oder $WO_3$, bezogen auf das Gesamtgewicht des Katalysators.

Als Bestandteile des Promotors sind Metalle oder Verbindungen von Metallen der Gruppen 2 (Be, Mg, Ca, Sr, Ba), 3 (Sc, Y, La) einschließlich der Lanthaniden (Ce, Pr, Nd, Pm, Sm, Eu, Gd, Tb, Dy, Ho, Er, Tm, Yb, Lu), 5 (V, Nb, Ta), 6 (Cr), 7 (Mn, Re), 8 (Fe, Ru, Os) und 14 (Ge, Sn, Pb) des Periodensystems der Elemente geeignet.

Bevorzugt wird die Verwendung von Ba, Y, La, Ce, Nb, Cr, Mn, Fe, Ru und Sn oder ihrer Verbindungen und in besonderer Weise wird die Verwendung von Nb, Fe, Y und Cr oder ihrer Verbindungen bevorzugt.

Der Promotor kann die genannten Elemente einzeln oder im Gemisch oder im Gemisch mit ihren Verbindungen oder ein Gemisch ihrer Verbindungen umfassen. Die genaue chemische und physikalische Struktur der vom Promotor umfaßten Bestandteile ist unbekannt. Ohne an ein Modell gebunden zu sein, wird zwar angenommen, daß spätestens nach der Kalzinationsbehandlung des Katalysators die Bestandteile des Promotors nicht in Form der Elemente vorliegen, aus Gründen der Einfachheit wird aber der Gehalt des Katalysators an Promotor als Gehalt an den vom Promotor umfaßten Metallen angegeben.

Die Katalysatoren enthalten im allgemeinen 0,01 bis 30 Gew.-%, vorzugsweise 0,05 bis 20 Gew.-% und besonders bevorzugt 0,1 bis 15 Gew.-% an Promotor, berechnet als Summe seiner Bestandteile in Form ihrer Elemente und bezogen auf das Gesamtgewicht des Katalysators. In vielen Fällen, insbesondere bei den bevorzugt oder besonders bevorzugt verwendeten Promotorbestandteilen liegt der Promotorgehalt im Bereich von 0,2 bis 3 Gew.-%. Die zur Optimierung einer bestimmten gewünschten Eigenschaft des herzustellenden PTHFs (Aktivität, mittleres Molekulargewicht oder Dispersion) optimale Menge des Promotors oder Art und Menge seiner Bestandteile ist anhand weniger Routineversuche einfach bestimmbar.

Zusätzlich zu der Aktivmasse und dem Promotor kann der Katalysator auch noch Schwefel und/oder Phosphor enthalten, wobei ein Katalysator mit Schwefelzusatz bevorzugt verwendet wird. Ohne an ein Modell gebunden zu sein, wird im Folgenden angenommen, daß der Schwefel in den erfindungsgemäßen Katalysatoren als Sulfat und der Phosphor als Phosphat vorliegt. Die Katalysatoren können 0,01 bis 15 Gew.-%, vorzugsweise 0,1 bis 10 Gew.-%, insbesondere 0,25 bis 5 Gew.-% sauerstoffhaltige Schwefel- oder Phosphorverbindungen, berechnet als Sulfat oder Phosphat und bezogen auf das Gesamtgewicht des Katalysators, enthalten.

Die Herstellung der im erfindungsgemäßen Verfahren zu verwendenden Katalysatoren erfolgt analog den in DE-A 44 33 606 oder WO-A 96/09335, auf die hiermit ausdrücklich Bezug genommen wird, beschriebenen Methoden zur Herstellung der in den in diesen Schriften beschriebenen Verfahren zur Herstellung von PTHF einzusetzenden Katalysatoren. Die im erfindungsgemäßen Verfahren einzusetzenden Katalysatoren unterscheiden sich von den aus DE-A 44 33 606 und WO-A 96/09335 bekannten im wesentlichen nur durch das Vorhandensein des Promotors.

Zur Herstellung der Katalysatoren wird im allgemeinen von einem Trägermaterial oder einem Vorläufer eines Trägermaterials, das bei der Herstellung des Katalysators, insbesondere bei der Kalzination, weitestgehend oder vollständig in das Trägermaterial umgewandelt wird, ausgegangen. Bevorzugterweise wird von Trägervorläufern ausgegangen, die viele Hydroxigruppen enthalten wie beispielsweise frisch gefällte Hydroxide. Es ist jedoch ebenfalls möglich, kommerzielle Oxide als Träger einzusetzen oder Hydroxide, die nach ihrer Fällung getrocknet wurden. Die Fällung von Hydroxiden erfolgt in an sich bekannter Weise, zum Beispiel durch Zugabe von Ammoniak oder wäßriger Ammoniaklösung zu löslichen oder hydrolysierbaren Verbindungen der Elemente, aus deren Oxiden der Träger besteht, und Abtrennung des Niederschlags. Eine anschließende Trocknung kann bei 20 bis 350 °C, vorzugsweise bei 50 bis 150 °C, insbesondere 100 bis 130 °C, bei Atmosphärendruck oder vermindertem Druck erfolgen.

Ein sehr gut geeigneter Träger ist Titandioxid, das überwiegend in der Anatas-Modifikation vorliegt. Bevorzugterweise wird Titandioxid verwendet, das nicht mehr als 35 Gew.-% der Rutil- und Brookit-Modifikationen enthält.

Dieses Titandioxid kann beispielsweise durch Kalzination während der Katalysatorherstellung aus Titanhydroxid hergestellt werden. Titanhydroxid kann durch Fällung aus einer hydrolysierbaren Titan-Ausgangsverbindung erzeugt werden. Als hydrolysierbare Ausgangsverbindungen zur Herstellung des Titanhydroxids kommen beispielsweise die Halogenide, Nitrate oder Alkoxide in Betracht. Beispiele für geeignete Ausgangsverbindungen sind Titantetraisopropylat, Titanylchlorid, Titanylnitrat, Titantetrachlorid oder Titanylsulfat. Vorzugsweise wird aus Lösungen dieser Verbindungen das Hydroxid mittels wäßriger Ammoniaklösung ausgefällt. Als Lösungsmittel für die Titan-Ausgangsverbindungen können alle Lösungsmittel verwendet werden, in denen die gewählte Ausgangsverbindungen löslich und mittels wäßriger Ammoniaklösung fällbar ist. Beispiele für solche Lösungsmittel sind die $C_1$-$C_8$-Alkohole, wie Methanol, Ethanol, Propanol, iso-Propanol, n-Butanol, iso-Butanol, tert.-Butanol, Pentanol, Hexanol oder 2-Ethylhexanol. Es ist prinzipiell auch auch möglich, aus diesen alkoholischen Lösungen das Titanhydroxid durch Zugabe von Wasser oder verdünnter Schwefelsäure auszufällen.

Im allgemeinen entsteht bei der Fällung des Hydroxids ein gelartiger Niederschlag, der nach Trocknung ein röntgenamorphes Pulver ergibt. Es besteht die Möglichkeit, daß diese röntgenamorphen Niederschläge außer aus den Hydroxiden zusätzlich noch aus einer Vielzahl anderer Hydroxigruppen enthaltender Verbindungen zusammengesetzt sind, beispielsweise anderen Oxidhydraten, Metasäuren, oder polymeren, wasserunlöslichen Hydroxo-Komplexen. Da die genaue chemische Zusammensetzung dieser Niederschläge aber nicht ermittelt werden kann, wird der Einfachheit halber angenommen, daß es sich dabei um das Hydroxid handelt. Die Bezeichnung "Hydroxid" im Sinne dieser Anmeldung stellt somit eine Sammelbezeichnung für die bei den vorgenannten Fällungsmethoden erhaltenen Hydroxigruppen enthaltenden Niederschläge dar. Dem Hydroxid kann durch eine gängige Trocknungsmethode, beispielsweise Erwärmung auf 90 bis 150 °C und/oder Anwendung eines reduzierten Drucks soweit Wasser entzogen werden, daß ein rieselfähiges und gut handhabbares Pulver entsteht.

Auf die Träger oder Trägervorläufer werden die Vorläuferverbindungen der Aktivmasse und der Bestandteile des Promotors mit bekannten Methoden aufgebracht.

Eine aufgrund ihrer Einfachheit bevorzugte Methode ist die Imprägnierung des Trägers oder Trägervorläufers mit einer Lösung von Vorläuferverbindungen. Prinzipiell ist die Verwendung beliebiger Lösungsmittel, rein oder im Gemisch, und beliebiger Vorläuferverbindungen möglich, wobei die Vorläuferverbindungen im gewählten Lösungsmittel oder Lösungsmittelgemisch unter den gewählten Verfahrensbedingungen, wie etwa Temperatur und Konzentration, löslich sein sollten. Die Wahl von Lösungsmittel und Vorläuferverbindungen kann routinemäßig anhand einer Löslichkeitstabelle erfolgen. Bevorzugt wird Wasser als Lösungsmittel verwendet. Zur Erhöhung der Löslichkeit, insbesondere der Molybdän- oder Wolframverbindungen, kann eine wäßrige Ammoniaklösung als Lösungsmittel verwendet werden.

Als wasserlösliche Vorläuferverbindungen der Aktivmasse können beispielsweise die wasserlöslichen Salze der Molybdänsäure ($H_2MoO_4$) oder der Wolframsäure ($H_2WO_4$), wie sie beispielsweise beim Lösen von Molybdäntrioxid oder Wolframtrioxid in wäßrigem Ammoniak entstehen, oder die daraus beim Ansäuern entstehenden Isopolyverbindungen verwendet werden.

Als wasserlösliche Vorläuferverbindungen der Promotorbestandteile können die wasserlöslichen Salze der entsprechenden Metalle verwendet werden. Mit der Maßgabe, daß das entsprechende gewählte Anion die Eigenschaften des Katalysators in der Polymerisation von THF nicht stören darf, was sich durch einfache Routineversuche leicht prüfen läßt, können geeignete Salze aus einer Löslichkeitstabelle gewählt werden.

Beispiele für geeignete Salze sind Bariumacetat, Yttriumnitrat, Lanthan- oder Cersulfat oder -nitrat, Nioboxalat oder Niobammonium-oxalat, Ammoniumdichromat, Mangannitrat, Eisensulfat oder -nitrat, Rutheniumchlorid oder Zinnsulfat.

Wenn die Herstellung eines Katalysators mit einem Gehalt an Schwefel und/oder Phosphor gewünscht ist, wird der Tränklösung mindestens eine Schwefel und/oder Phosphor enthaltende Verbindung zugesetzt. Die Wahl dieser Verbindung oder Verbindungen unterliegt keiner besonderen Beschränkung. Beispiele für verwendbare Schwefel- oder Phosphorverbindungen sind Schwefelsäure, lösliche Sulfate wie Ammoniumsulfat oder Ammoniumhydrogensulfat oder die entsprechenden Sulfite oder Hydrosulfite, Phosphorsäure, lösliche Phosphate wie Ammoniumphosphat oder die Ammoniumhydrogenphosphate oder die entsprechenden Phosphite. Die Zugabe von Schwefel und/oder Phosphor kann auf einfache Weise auch durch die Verwendung von löslichen schwefel- oder phosphorhaltigen Vorläuferverbindungen der Promotorbestandteile, beispielsweise deren Sulfate, erfolgen, sofern nicht eine zu geringe Löslichkeit im Tränkmittel entgegensteht.

Es ist möglich, die Promotorbestandteile oder ihre Vorläufer vor, gleichzeitig mit oder nach der Aktivmasse oder deren Vorläufer oder gegebenenfalls dem Schwefel und/oder Phosphorzusatz aufzubringen. Es ist ebenso möglich, verschiedene Bestandteile der Aktivmasse, des Promotors, Schwefel oder Phosphor in mehreren Tränkschritten aufzubringen. Es ist ebenfalls möglich, die Gesamtmenge an Aktivmasse, Promotor und gegebenenfalls Schwefel und/oder Phosphor nicht in einem Schritt, sondern in mehreren Tränkschritten nacheinander aufzubringen.

Falls mehrere Tränkschritte angewandt werden, kann zwischen den einzelnen Schritten eine Trocknung und/oder eine Kalzinierung erfolgen, vorteilhafterweise wird mindestens ein Trocknungsschritt durchgeführt.

Im allgemeinen ist es jedoch einfacher und daher eine bevorzugte Vorgehensweise, die gesamte Aktivmasse und alle Promotorbestandteile wie auch gegebenenfalls den Schwefel- und/oder Phosphorzusatz durch Imprägnieren des Trägers oder Trägervorläufers mit einer Lösung, die sowohl mindestens eine Vorläuferverbindung der Aktivmasse als auch mindestens eine Vorläuferverbindung des Promotors als auch gegebenenfalls den Schwefel- und/oder Phosphorzusatz gemeinsam enthält, und anschließende Trocknung und Kalzination gleichzeitig aufzubringen.

Die getränkten Träger oder Trägervorläufer werden im allgemeinen bei Temperaturen von 80 bis 500 °C, vorzugsweise von 100 bis 350°C, bei Atmosphärendruck oder bei vermindertem Druck getrocknet. Dabei wird der Katalysatorvorläufer erhalten.

Es ist zur Herstellung des Katalysatorvorläufers ebenso möglich und kann unter Umständen auch vorteilhaft sein, die genannten Vorläuferverbindungen der Aktivmasse und des Promotors und gegebenenfalls den Schwefel- und/oder Phosphorzusatz als ungelöste Verbindungen mit dem Träger oder Trägervorläufer in einem geeigneten Apparat innig zu vermischen, beispielsweise in einem Kneter oder in einem Kollergang, wobei auch Hilfsmittel wie Polyethylen- oder -butylenglykole zugesetzt werden können. Bei dieser Vorgehensweise können auch in Wasser oder anderen Lösungsmitteln unlösliche Verbindungen eingesetzt werden, beispielsweise $MoO_3$, $WO_3$, $H_2WO_4$, $BaSO_4$ oder FeOOH. Auch eine Kombination von Imprägnierschritten mit einer vorangehenden Vermischung fester Vorläuferverbindungen ist denkbar. So kann zum Beispiel zuerst eine Mischung aus Titandioxid mit einer Wolframverbindung wie $H_2WO_4$ hergestellt werden, die nach einem eventuellen Trocknungsschritt mit einer Lösung eines Promotorvorläufers, beispielsweise Mangannitrat, imprägniert wird. Alternativ kann zuerst ein Träger oder Trägervorläufer mit einer löslichen Verbindung wie Ammoniumdichromat imprägniert werden und nach einem eventuellen Trocknungsschritt mit einer festen Wolframverbindung wie $WO_3$ vermischt werden. In allen diesen Schritten kann auch, falls beabsichtigt, ein Zusatz von Schwefel und/oder Phosphor erfolgen.

Die so behandelten Träger oder Trägervorläufer werden wie die ausschließlich durch Tränkung hergestellten Katalysatorvorläufer vor der Weiterbehandlung getrocknet.

Eine weitere Möglichkeit zur Herstellung der Katalysatorvorläufer ist eine Kofällung eines hydroxidischen Trägervorläufers mit einem Vorläufer der Aktivmasse und des Promotors sowie gegebenenfalls einem Zusatz von Schwefel und/oder Phosphor und anschließende Trocknung wie im Falle der Imprägnierung. Diese Kofällung kann zum Beispiel wie die Fällung eines Hydroxids durch Zugabe von Ammoniak oder wäßriger Ammoniaklösung in eine Lösung, die lösliche oder hydrolysierbare Vorläuferverbindungen von Träger, Aktivmasse, Promotor und gegebenenfalls Schwefel- und/oder Phosphorzusatz enthält, erfolgen. Dieser Herstellweg kann dort vorteilhaft sein, wo ein besonders homogener Katalysator erforderlich ist. Es ist analog zur oben beschriebenen Vorgehensweise bei der Verarbeitung ungelöster Vorläuferverbindungen auch bei einer Kofällung möglich, zunächst nur den Trägervorläufer gemeinsam mit dem Aktivmassenvorläufer und/oder dem Promotorvorläufer und/oder dem Schwefel- und/oder Phosphorzusatz zu fällen, diesen Feststoff abzutrennen und zu trocknen und anschließend die noch fehlenden Komponenten durch einen oder mehrere Tränkschritte oder auch durch weitere Auffällung aufzubringen.

Auch eine Herstellung eines Katalysators auf pyrogenem Wege, also durch Pyrolyse oder Verbrennung einer Mischung von Vorläuferverbindungen des Trägers, der Aktivmasse und des Promotors ist möglich und führt im allgemeinen zu besonders reinen Katalysatoren. Geeignete Vorläuferverbindungen sind solche, die ausreichend flüchtig sind und rückstandsfrei zu Oxiden pyrolysiert oder verbrannt werden können, etwa die Element-Alkoxide oder Element-Chloride. Beispielsweise kann ein Katalysator zur Verwendung im erfindungsgemäßen Verfahren durch Pyrolyse einer Mischung aus $Ti(O^iPr)_4$, $W(OEt)_5$ und $Nb(OEt)_5$ sowie anschließende Kalzination hergestellt werden. Auch hier kann eine Dotierung mit Schwefel und/oder Phosphor erfolgen, indem mindestens eine verdampfbare pyrolysierbare Schwefel- und/oder Phosphorverbindung zugegeben wird, beispielsweise $H_2S$, $SO_2$, $SO_3$, $PH_3$ oder flüchtige Ester

der Schwefel- oder Phosphorsäure wie die Methyl- oder Ethylester.

Unabhängig vom Herstellweg werden alle Katalysatorvorläufer durch eine Kalzinierung an der Luft bei Temperaturen von 500 bis 900 °C, vorzugsweise von 550 bis 850 °C und besonders bevorzugt bei Temperaturen von 600 bis 800 °C in die fertigen Katalysatoren umgewandelt. Die Kalzinierung bei diesen hohen Temperaturen ist wesentlich für die Erzielung eines hohen Umsatzes und damit einer hohen Raum-Zeit-Ausbeute bei der Polymerisation von THF. Bei niedrigeren Kalzinierungstemperaturen bewirken die Katalysatoren zwar ebenfalls die THF-Polymerisation, allerdings nur mit unwirtschaftlich niedrigen Umsätzen.

Erfindungsgemäß können die Katalysatoren auch durch eine Behandlung mit einem Reduktionsmittel nach ihrer Kalzinierung noch zusätzlich aktiviert werden. Die Aktivierung der Katalysatoren durch eine Vorhydrierung kann analog der in der älteren deutschen Patentanmeldung DE-A 19641481.4 vom 09.10.1996 im einzelnen beschriebenen Vorgehensweise erfolgen. Im allgemeinen wird dazu der Katalysator vor seinem Einsatz in der Polymerisation von THF und nach seiner Kalzination mit einem Reduktionsmittel behandelt.

Als Reduktionsmittel sind prinzipiell alle Reduktionsmittel geeignet, die keine oder lediglich in der Polymerisation von Tetrahydrofuran inerte und die Verwendung der Polymerisationsprodukte nicht beeinträchtigende Rückstände auf den mit ihnen behandelten Katalysatoren hinterlassen.

Als Reduktionsmittel können zum Beispiel organische Verbindungen, die gegenüber den Katalysatoren in ihrer kalzinierten Form reduzierend wirken, eingesetzt werden, wie etwa Alkohole, Aldehyde, Carbonsäuren oder Kohlenhydrate, wobei bi- oder polyfunktionelle Verbindungen wie etwa Hydroxisäuren, Hydroxialdehyde, Polyalkohole, Di- oder Polyaldehyde oder Di- oder Polysäuren oder Salze organischer Reduktionsmittel, hierunter bevorzugterweise die Ammoniumsalze, ebenfalls eingesetzt werden können.

Beispiele für verwendbare organische Reduktionsmittel sind geradkettige oder verzweigte Aldehyde mit einem bis zehn Kohlenstoffatomen wie Formaldehyd oder Acetaldehyd, Propionaldehyd, Butyraldehyd, iso-Butyraldehyd oder Glyoxal, geradkettige, verzweigte oder cyclische Mono- oder Dicarbonsäuren oder deren Salze wie etwa Ameisensäure, Ammoniumformiat, Essigsäure, Propionsäure, Buttersäure, iso-Buttersäure, Oxalsäure, Milchsäure, Benzoesäure, Citronensäure oder Ascorbinsäure, geradkettige, verzweigte oder cyclische Alkohole oder Kohlenhydrate wie Methanol, Ethanol, Propanol, iso-Propanol oder Aldosen wie etwa Glucose.

Beispiele für erfindungsgemäß einsetzbare anorganische Reduktionsmittel sind Wasserstoff enthaltende Verbindungen wie Hydride, zum Beispiel Alkalitetrahydridoboranate wie Natriumtetrahydridoboranat, 9-Borabicyclononan, Catecholboran, eine Lösung von Diboran in Tetrahydrofuran oder in anderen Ethern, Alkalitetrahydridoaluminate wie etwa Lithiumtetrahydridoaluminat, oder einfache binäre Hydride wie die Hydride der Alkali- oder Erdalkalimetalle, etwa Lithiumhydrid, Natriumhydrid oder Calciumhydrid.

Als bevorzugte Reduktionsmittel werden wasserstoffhaltige Gase wie reiner Wasserstoff oder Wasserstoff im Gemisch mit anderen Gasen eingesetzt. Besonders bevorzugt ist die Verwendung von Wasserstoff entweder in reiner Form oder mit einem Inertgas wie zum Beispiel Stickstoff oder Argon verdünnt. Sehr gut geeignet sind zum Beispiel Gemische aus Stickstoff und Wasserstoff. Solche Gemische können etwa bis zu 60 Vol.-% Wasserstoff in Stickstoff enthalten, Wasserstoffgehalte von jeweils bis zu 40 Vol.-% oder 20 Vol.-% sind ebenfalls geeignet. Im allgemeinen reicht jedoch ein Wasserstoffgehalt von bis zu 10 Vol. -% aus. Der Gehalt an Wasserstoff kann auch im Lauf der Reduktionsreaktion sukzessive erhöht werden, um eine übermäßig stark exotherme Reaktion zu Beginn zu vermeiden. So kann beispielsweise zu Beginn ein Inertgas/Wasserstoff- Volumenverhältnis von ungefähr 99 : 1 (oder sogar noch höher, etwa 99,5 : 0,5) verwendet werden, das im Laufe der Reduktion im allgemeinen erniedrigt wird, da ansonsten die erforderlichen Reduktionsdauern ansteigen. Es können nacheinander oder direkt Verhältnisse von zum Beispiel 98 : 2, 95 : 5, 90 : 10, 80 : 20, 60 : 40, 50 : 50 oder noch niedrigere Werte, bis hin zu reinem Wasserstoff, eingestellt werden, wobei auch ein feiner abgestufter Übergang zwischen den Gemischen mit unterschiedlicher Wasserstoffkonzentration bis hin zu einem kontinuierlichen Ansteigen des Wasserstoffanteils angewandt werden kann. Die Geschwindigkeit der Erhöhung des Wasserstoffanteils und der Endwert dieses Wasserstoffanteils werden vorteilhafterweise gemäß der bei der Reduktion freiwerdenden Wärme derart eingestellt, daß eine übermäßige Wärmeentwicklung vermieden wird. Eine übermäßige Wärmeentwicklung ist beispielsweise dann gegeben, wenn die freiwerdende Reaktionswärme durch das Kühlsystem des Reduktionsreaktors nicht mehr abgeführt werden kann. Eine übermäßige Wärmeentwicklung ist beispielsweise auch dann gegeben, wenn der Katalysator durch freiwerdende Reaktionswärme Temperaturen erreicht, die seinen Eigenschaften in der Polymerisation abträglich sind, etwa, wenn der Katalysator schmilzt, sintert oder sich sonst zumindest teilweise thermisch verändert, etwa durch thermische Zersetzung oder Verdampfen von organischen Bestandteilen wie etwa Extrusions- oder Tablettierungs-Hilfsstoffen.

Die Behandlung des kalzinierten Katalysators mit dem Reduktionsmittel erfolgt im allgemeinen bei Temperaturen von 20 °C bis 500 °C. Wenn die Reduktion mit Wasserstoff enthaltenden Gasen durchgeführt wird, liegt die bevorzugte Temperatur im Bereich von 100 °C bis 400 °C. Wird die Reduktion jedoch mit festen, flüssigen oder gelösten Reduktionsmitteln durchgeführt, so liegt die bevorzugte Reduktionstemperatur im Bereich von 20 bis 200 °C.

Wenn die Reduktion nicht durch Behandlung des Katalysators mit gasförmigen Stoffen durchgeführt wird, ist der verwendete Druck im allgemeinen ohne Bedeutung. Wenn in diesem Fall sich das Reduktionsmittel im Laufe der Reduktion des Katalysators ganz oder teilweise in gasförmige Oxidationsprodukte umwandelt, sollte der verwendete Reaktionsdruck jedoch die Bildung dieser gasförmigen Oxidationsprodukte nicht behindern, ein nicht zu hoher Druck ist also im allgemeinen vorteilhaft. Er kann beispielsweise zwischen 1 und 5 bar absolut betragen. Bevorzugt wird die Reduktion unter Normaldruck durchgeführt. Wird die Reduktion mit gasförmigen Reduktionsmitteln durchgeführt, so kann sie bei Normaldruck oder erhöhtem Druck, zum Beispiel zwischen einem und 300 bar (absolut) und in bevorzugter Weise zwischen einem und 50 bar (absolut) erfolgen.

Die Reduktionsdauer beträgt im allgemeinen 10 Minuten bis zu 100 Stunden, in bevorzugter Weise 30 Minuten bis zu 50 Stunden und besonders bevorzugt von 1 Stunde bis zu 24 Stunden.

Das Reduktionsmittel wird im allgemeinen in einer Menge von 0,01 bis 100 Mol, insbesondere 0,1 bis 50 Mol je Gramm des kalzinierten Katalysators und in bevorzugter Weise in einer Menge von 0,1 bis 10 Mol je Gramm des kalzinierten Katalysators eingesetzt.

Die für eine gegebene Zusammensetzung des kalzinierten Katalysators optimalen Bedingungen für die Reduktionstemperatur, die Reduktionsdauer und die Menge des Reduktionsmittels müssen im Einzelfall im Rahmen der angegebenen allgemeinen Bereiche empirisch durch routinemäßige Reduktionsversuche und Reaktionstests festgelegt werden, da sie vom Gehalt des Katalysators an Aktivkomponente, der Art der Aktivkomponente, der Art des Trägers und der Art und Menge der Dotierung abhängen. Im allgemeinen ist die Reduktion beendet, wenn die zu Beginn der Reduktion üblicherweise auftretende Wärmeentwicklung im wesentlichen abgeklungen ist, wobei eine Nachreduktionszeit von 5 Minuten bis 5 Stunden, vorteilhafterweise von 10 Minuten bis 2 Stunden, angeschlossen werden kann.

In bevorzugter Weise wird die Reduktion durch Behandlung des Katalysators mit einem gasförmigen Reduktionsmittel und in besonders bevorzugter Weise durch Behandlung des Katalysators mit einem Gemisch aus Wasserstoff und Stickstoff durchgeführt. Dazu wird der Katalysator in Form von Pulver oder Formkörpern vorteilhafterweise in einem Festbettreaktor angeordnet und das Katalysatorbett wird vom wasserstoffhaltigen Gasgemisch durchströmt. Der Reaktor verfügt über ein Temperatur-Regelsystem, das einerseits in der Lage ist, die bei der Reaktion freiwerdende Wärme abzuführen und andererseits die notwendige Reaktionstemperatur einstellen kann. Nach der Hydrierung kann der Katalysator, wenn dies nicht schon vor der Hydrierung geschah, zu Formkörpern verformt werden.

Die erfindungsgemäß anwendbaren Katalysatoren können für die Polymerisation von THF in Form von Pulver, beispielsweise bei der Durchführung des Verfahrens in Suspensionsfahrweise, oder zweckmäßigerweise als Formkörper, z. B. in Form von Zylindern, Kugeln, Ringen, Spiralen oder Splitt, insbesondere bei einer Festbettanordnung des Katalysators, welche bei Verwendung von z. B. Schlaufenreaktoren oder beim kontinuierlichen Betrieb des Verfahrens bevorzugt ist, im erfindungsgemäßen Verfahren eingesetzt werden.

Die Durchführung des erfindungsgemäßen Verfahrens kann analog den in DE-A 44 33 606 oder WO 96/09335, auf die hiermit ausdrücklich Bezug genommen wird, im einzelnen beschriebenen Verfahren erfolgen. Die Verwendung des Comonomers 2-Butin-1,4-diol im erfindungsgemäßen Verfahren kann analog der im einzelnen in der deutschen Patentanmeldung Nr. 19507399.1 (= PCT-Anmeldung PCT/EP96/00702), auf die hiermit ausdrücklich Bezug genommen wird, beschriebenen Vorgehensweise erfolgen.

Beispiele

Katalysatorherstellung

Die Katalysatoren wurden nach folgendem Verfahren hergestellt: Durch Zugabe von Titanhydroxid und der Promotorverbindung oder ihrem Vorläufer zu einer Lösung von Wolframsäure ($H_2WO_4$, hergestellt durch Einsatz der entsprechenden Menge Wolframtrioxid $WO_3$) in einer 32 Gew.-%igen wäßrigen Ammoniaklösung wurde eine knetbare Masse erhalten. Die Menge an Ammoniaklösung wurde so bemessen, daß die Wolframsäure gerade rückstandsfrei gelöst war. Wenn die Masse in dieser Form nicht knetbar war, wurde in kleinen Portionen von je ca. 10 ml weitere Ammoniaklösung zugegeben, bis eine knetbare Masse entstanden war. Diese Masse wurde 120 Minuten lang in einem Laborkneter geknetet (Ausnahmen: Katalysatoren aus den Beispielen 1: 150 min, 3: 90 min, V2: 180 min), anschließend über 12 Stunden bei 120 °C getrocknet und nach der Trocknung gesiebt. Das gesiebte Pulver wurde zu 3 x 3 mm-Tabletten tablettiert. Die Tabletten wurden in Luft 2 Stunden lang bei 650 °C ± 25 °C kalziniert.

Die fertigen Katalysatortabletten wurden mittels quantitativer Röntgenfluoreszenzspektroskopie auf ihren Gehalt an Wolfram (berechnet als Wolframtrioxid, $WO_3$) und an Promotor (berechnet als Metall) analysiert.

Die eingesetzten Mengen an Einsatzstoffen sowie die Analysenergebnisse sind gemeinsam mit den Ergebnissen der Polymerisationsversuche in Tabelle 1 aufgeführt.

Diskontinuierliche THF-Polymerisation

Die diskontinuierlichen Polymerisationsversuche wurden in 100-ml Glaskolben mit Rückflußkühler unter einer Stickstoff-Atmosphäre durchgeführt. 20 g Katalysatortabletten, die vor ihrer Verwendung zur Entfernung von adsorbiertem Wasser 18 Stunden lang bei 180 °C/0,3 mbar getrocknet worden waren, wurden in 40 g Butandiolhaltigem THF (Butandiolkonzentration 2000 ppm) 24 Stunden lang auf 50 °C erhitzt. Anschließend wurde dem Reaktionsgemisch wasserhaltiges THF (1 % $H_2O$) zugegeben und der Katalysator durch Filtration abgetrennt. Nach dreimaligem Waschen des Katalysator mit je 40 g THF wurden die Filtrate vereinigt und bei 70 °C/20 mbar am Rotationsverdampfer und anschließend noch 30 min bei 150 °C/0,3 mbar im Kugelrohr eingeengt. Als Destillationsrückstand anfallendes PTHF wurde ausgewogen und mittels Gel-Permeations-Chromatographie (GPC) analysiert. Tabelle 1 faßt die an den Katalysatoren 1 bis 10 erhaltenen Versuchsergebnisse und die Ergebnisse zweier Vergleichsversuche V1 und V2 zusammen.

Die Dispersität D als Maß für die Molekulargewichtsverteilung der gemäß den Beispielen hergestellten Polymeren wurde aus dem Verhältnis von Gewichtsmittel des Molekulargewichts ($M_w$) und Zahlenmittel des Molekulargewichts ($M_n$) nach der Gleichung

$$D = M_w / M_n$$

errechnet. $M_w$ und $M_n$ wurden mittels GPC bestimmt, wobei ein standardisiertes Polystyrol zur Eichung verwendet wurde. Aus den erhaltenen Chromatogrammen wurde das Zahlenmittel $M_n$ nach der Gleichung

$$M_n = \Sigma\, C_i\, /\, \Sigma(c_i\, /\, M_i)$$

und das Gewichtsmittel $M_w$ nach der Gleichung

$$M_w = (\Sigma\, (c_i * M_i))\, /\, \Sigma\, c_i$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet.

wie die Versuche zeigen, führt die Verwendung promotierter Katalysatoren im erfindungsgemäßen Verfahren in allen Fällen zu einer Ausbeutesteigerung.

Die geringste gemessene Ausbeutesteigerung tritt bei Beispiel 2 auf. Selbst dort beträgt aber, relativ zum passenden Vergleichsbeispiel V2 (Katalysator mit vergleichbarem Aktivmassengehalt), diese Ausbeutesteigerung bereits 5 %. Die Beispiele zeigen daher, daß beim Einsatz des erfindungsgemäßen Verfahrens die Kapazität bestehender Anlagen zur Herstellung von PTHF ohne Umrüstung deutlich gesteigert werden kann oder entsprechend zukünftige Anlagen kleiner und daher mit entsprechend verringertem Investitionsvolumen gebaut werden können.

Tabelle 1: Einsatzstoffe, Analysendaten und Versuchsergebnisse

| Beispiel | Ti-hyd-roxid [g] | $H_2WO_4$ [g] | Promotor oder -vorläufer | | Analyse [Gew.-%] | | PTHF-Synthese | | |
|---|---|---|---|---|---|---|---|---|---|
| | | | Art | Menge [g] | $WO_3$ | Promotor (Metall) | Ausb. [%] | $M_n$ | D |
| 1 | 200 | 53 | $BaSO_4$ | 2 | 18,4 | 0,73 | 24 | 8310 | 2,4 |
| 2 | 150 | 32 | $SnSO_4$ | 29 | 17,2 | 9,20 | 21 | 8740 | 3,7 |
| 3 | 150 | 40 | $Y(NO_3)_3$ x $6H_2O$ | 2 | 22,7 | 0,25 | 28 | 6800 | 3,2 |
| 4 | 148 | 40 | $Ce(SO_4)_2$ | 2 | 23,3 | 0,68 | 25 | 6850 | 2,8 |
| 5 | 150 | 30 | "Nb.-ox."*) | 10 | 17,7 | 0,54 | 34 | 7000 | 5,0 |
| 6 | 140 | 40 | $(NH_4)_2Cr_2O_7$ | 10 | 23,2 | 2,60 | 27 | 8230 | 3,4 |
| 7 | 148 | 40 | $Mn(NO_3)_2$ | 2 | 23,5 | 0,33 | 23 | 7160 | 2,9 |
| 8 | 140 | 40 | $FeSO_4$ | 10 | 24 | 1,30 | 31 | 6660 | 4,0 |
| 9 | 150 | 29 | $FeSO_4$ | 9 | 17,7 | 1,20 | 30 | 8620 | 3,4 |
| 10 | 150 | 29 | $RuCl_3$ | 5,5 | 17,8 | 1,20 | 25 | 8640 | 3,8 |
| V1 (Verleich) | 150 | 40 | – | | 23,6 | – | 22 | 7870 | 2,2 |
| V2 (Verleich) | 1000 | 200 | – | | 18,4 | – | 20 | 5790 | 2,5 |

*) "Ammonium-Niob-Oxalat": Nioboxalat mit einem Gehalt an Ammoniumoxalat (erhältlich von H.C. Starck)

EP 0 941 269 B1

**Patentansprüche**

1. Verfahren zur Herstellung von Polytetrahydrofuran, Tetrahydrofuran-Copolymeren, Diestern oder Monoestern dieser Polymere durch die Polymerisation von Tetrahydrofuran in Gegenwart mindestens eines Telogens und/oder Comonomers an einem heterogenen Trägerkatalysator, der auf einem oxidischen Trägermaterial als Aktivmasse eine katalytisch aktive Menge mindestens einer sauerstoffhaltigen Molybdän- und/oder Wolframverbindung enthält und der nach Aufbringung der Vorläuferverbindungen der Aktivmasse auf den Trägermaterial-Vorläufer bei Temperaturen von 500 °C bis 1000 °C kalziniert worden ist, **dadurch gekennzeichnet, daß** man einen Katalysator verwendet, der einen Promotor enthält, welcher mindestens ein Element oder eine Verbindung eines Elements der 2., 3. einschließlich der Lanthaniden, 5., 6., 7., 8. oder 14. Gruppe des Periodensystems der Elemente umfaßt.

2. Verfahren nach Anspruch 1, **dadurch gekennzeichnet, daß** man einen Katalysator verwendet, dessen Träger Titandioxid ist.

3. Verfahren nach den Ansprüchen 1 oder 2, **dadurch gekennzeichnet, daß** man einen Katalysator verwendet, dessen Aktivmasse aus mindestens einer sauerstoffhaltigen Wolframverbindung besteht.

4. Verfahren nach den Ansprüchen 1 bis 3, **dadurch gekennzeichnet, daß** man einen Katalysator verwendet, der 0,1 bis 50 Gew.-% Aktivmasse, berechnet als $MoO_3$ oder $WO_3$ und bezogen auf das Gesamtgewicht des Katalysators, enthält.

5. Verfahren nach den Ansprüchen 1 bis 4, **dadurch gekennzeichnet, daß** man einen Katalysator verwendet, dessen Promotor mindestens ein Element oder mindestens eine Verbindung eines Elements umfaßt, das unter Ba, Sn, Y, La, Ce, Nb, Cr, Mn, Fe und Ru gewählt wird.

6. Verfahren nach Anspruch 5, **dadurch gekennzeichnet, daß** man einen Katalysator verwendet, dessen Promotor mindestens ein Element oder mindestens eine Verbindung eines Elements umfaßt, das unter Nb, Fe, Y und Cr gewählt wird.

7. Verfahren nach Ansprüchen 1 bis 6, **dadurch gekennzeichnet, daß** man einen Katalysator verwendet, der den Promotor in einer Menge von 0,1 - 15 Gew.-%, berechnet als das Element · oder die Elemente und bezogen auf das Gesamtgewicht des Katalysators, enthält.

8. Verfahren nach den Ansprüchen 1 bis 7, **dadurch gekennzeichnet, daß** man einen Katalysator verwendet, der zusätzlich mit Schwefel und/oder Phosphor dotiert ist.

9. Verfahren nach den Ansprüchen 1 bis 8, **dadurch gekennzeichnet, daß** man einen Katalysator verwendet, der nach der Kalzination, aber vor seinem Einsatz in der Polymerisation durch Behandlung mit einem Reduktionsmittel aktiviert wurde.

10. Verfahren nach den Ansprüchen 1 bis 9, **dadurch gekennzeichnet, daß** man als Telogen und/oder Comonomer Wasser, 1,4-Butandiol, 2-Butin-1,4-diol, Polytetrahydrofuran eines Molekulargewichts von 200 bis 700 Dalton, eine $C_1$- bis $C_{10}$-Monocarbonsäure oder ein Carbonsäureanhydrid aus $C_2$- bis $C_{20}$-Monocarbonsäuren oder Gemische dieser Telogene und/oder Comonomere verwendet.

11. Verfahren nach Anspruch 10, **dadurch gekennzeichnet, daß** man als Comonomer 2-Butin-1,4-diol verwendet.

12. Verfahren nach Anspruch 10, **dadurch gekennzeichnet, daß** man als Telogen Acetanhydrid verwendet.

**Claims**

1. A process for preparing polytetrahydrofuran, tetrahydrofuran copolymers, diesters or monoesters of these polymers by polymerization of tetrahydrofuran in the presence of at least one telogen and/or comonomer over a heterogeneous supported catalyst which comprises a catalytically active amount of at least one oxygen-containing molybdenum and/or tungsten compound as active composition on an oxidic support material and which has been calcined at from 500°C to 1000°C after application of the precursor compounds of the active composition onto the support material precursor, wherein the catalyst used further comprises a promoter comprising at least one element or one compound of an element of the second, third including the lanthanides, 5th, 6th, 7th, 8th or 14th group of the Periodic Table of the Elements.

2. A process as claimed in claim 1, wherein the catalyst used is one whose support is titanium dioxide.

3. A process as claimed in claim 1 or 2, wherein the catalyst used is one whose active composition comprises at least one oxygen-containing tungsten compound.

4. A process as claimed in any of claims 1 to 3, wherein the catalyst used contains from 0.1 to 50% by weight of active composition, calculated as $MoO_3$ or $WO_3$ and based on the total weight of the catalyst.

5. A process as claimed in any of claims 1 to 4, wherein the catalyst used is one whose promoter comprises at least one element or at least one compound of an element selected from among Ba, Sn, Y, La, Ce, Nb, Cr, Mn, Fe and Ru.

6. A process as claimed in claim 5, wherein the catalyst used is one whose promoter comprises at least one element or at least one compound of an element selected from among Nb, Fe, Y and Cr.

7. A process as claimed in any of claims 1 to 6, wherein the catalyst used contains 0.1 - 15% by weight of the promoter, calculated as the element or the elements and based on the total weight of the catalyst.

8. A process as claimed in any of claims 1 to 7, wherein the catalyst used is additionally doped with sulfur and/or phosphorus.

9. A process as claimed in any of claims 1 to 8, wherein the catalyst used has been activated by treatment with a reducing agent after calcination but before it is used in the polymerization.

10. A process as claimed in any of claims 1 to 9, wherein the telogen and/or comonomer used is water, 1,4-butanediol, 2-butyne-1,4-diol, polytetrahydrofuran having a molecular weight of from 200 to 700 dalton, a $C_1$-$C_{10}$-monocarboxylic acid or a carboxylic anhydride of a $C_2$-$C_{20}$- monocarboxylic acid or a mixture of these telogens and/or comonomers.

11. A process as claimed in claim 10, wherein 2-butyne-1,4-diol is used as comonomer.

12. A process as claimed in claim 10, wherein acetic anhydride is used as telogen.

## Revendications

1. Procédé de production de polytétrahydrofurane, de copolymères de tétrahydrofurane, de diesters ou de monoesters de ces polymères par la polymérisation de tétrahydrofurane en présence d'au moins un télogène et/ou un comonomère sur un catalyseur de support hétérogène, qui contient comme masse active sur un matériau de support de type oxyde une quantité active au niveau catalytique d'au moins un composé oxygéné de molybdène et/ou de tungstène et qui a été calciné à des températures de 500°C à 1000°C après le dépôt des composés précurseurs de la masse active sur le précurseur du matériau de support, **caractérisé en ce que** l'on utilise un catalyseur, qui contient un promoteur, qui comprend au moins un élément ou un composé d'un élément du groupe 2, 3, y compris les lanthanides, 5, 6, 7, 8 ou 14 du système périodique des éléments.

2. Procédé suivant la revendication 1, **caractérisé en ce que** l'on utilise un catalyseur, dont le support est du dioxyde de titane.

3. Procédé suivant la revendication 1 ou la revendication 2, **caractérisé en ce que** l'on utilise un catalyseur, dont la masse active se compose d'au moins un composé oxygéné du tungstène.

4. Procédé suivant les revendications 1 à 3, **caractérisé en ce que** l'on utilise un catalyseur, qui contient 0,1 à 50 % en poids de masse active, calculée sous forme de $MoO_3$ ou de $WO_3$ et rapportée au poids total du catalyseur.

5. Procédé suivant les revendications 1 à 4, **caractérisé en ce que** l'on utilise un catalyseur, dont le promoteur comprend au moins un élément ou au moins un composé d'un élément, qui est choisi parmi Ba, Sn, Y, La, Ce, Nb, Cr, Mn, Fe et Ru.

6. Procédé suivant la revendication 5, **caractérisé en ce que** l'on utilise un catalyseur, dont le promoteur comprend au moins un élément ou au moins un composé d'un élément qui est choisi parmi Nb, Fe, Y et Cr.

7. Procédé suivant les revendications 1 à 6, **caractérisé en ce que** l'on utilise un catalyseur, qui contient le promoteur en une quantité de 0,1 - 15 % en poids, calculée sous la forme de l'élément ou des éléments et rapportée au poids total du catalyseur.

8. Procédé suivant les revendications 1 à 7, **caractérisé en ce que** l'on utilise un catalyseur, qui est en outre dopé au soufre et/ou au phosphore.

9. Procédé suivant les revendications 1 à 8, **caractérisé en ce que** l'on utilise un catalyseur, qui a été activé par un traitement avec un agent réducteur après sa calcination mais avant son emploi dans la polymérisation.

10. Procédé suivant les revendications 1 à 9, **caractérisé en ce que** l'on utilise comme télogène et/ou comme comonomère l'eau, le 1,4-butanediol, le 2-butine-1,4-diol, un polytétrahydrofurane d'un poids moléculaire de 200 à 700 dalton, un acide monocarboxylique $C_1$ - $C_{10}$ ou un anhydride d'acide carboxylique des acides monocarboxyliques $C_2$ à $C_{20}$ ou des mélanges de ces télogènes et/ou de ces comonomères.

11. Procédé suivant la revendication 10, **caractérisé en ce que** l'on utilise comme comonomère le 2-butine-1,4-diol.

12. Procédé suivant la revendication 10, **caractérisé en ce que** l'on utilise comme télogène l'anhydride acétique.